# EUROPÄISCHE PATENTSCHRIFT

(11) **EP 1 165 216 B1**
(45) Veröffentlichungstag und Bekanntmachung des Hinweises auf die Patenterteilung: **07.03.2007**
(21) Anmeldenummer: 00909286.7
(22) Anmeldetag: 01.03.2000
(51) Int. Cl.: B01D 71/52, C08G 65/48, H01M 8/10

(54) **VERWENDUNG VON AROMATISCHEN POLYMEREN IN BRENNSTOFFZELLEN ODER IN HOCHLEISTUNGSKONDENSATOREN**
USE OF AROMATIC POLYMERS IN FUEL CELLS OR IN HIGH CAPACITY CAPACITORS
UTILISATION DE POLYMERES AROMATIQUES DANS LES CELLULES ELECTROCHIMIQUES OU DES CAPACITEURS DE HAUTE CAPACITE

(30) Priorität: 02.03.1999 DE 19909028
(43) Veröffentlichungstag der Anmeldung: 02.01.2002
(73) Patentinhaber: Pemeas GmbH, 65926 Frankfurt am Main (DE)
(72) Erfinder: DYCK, Alexander, D-21502 Geesthacht (DE); SOCZKA-GUTH, Thomas, D-65719 Hofheim (DE)
(74) Vertreter: Luderschmidt, Schüler & Partner
(86) Internationale Anmeldenummer: PCT/EP2000/001785
(87) Internationale Veröffentlichungsnummer: WO 2000/051716

(56) Entgegenhaltungen:
- EP-A- 0 688 824
- WO-A-96/29359
- WO-A-96/29360
- US-A- 4 971 695
- US-A- 5 071 448
- US-A- 5 364 454

## Beschreibung

Die vorliegende Erfindung betrifft die Verwendung von aromatischen Polymeren in Brennstoffzellen oder in Hochleistungskondensatoren, wie in Anspruch 1 definiert.

Brennstoffzellen sind elektrochemische Energieumwandler, die sich besonders durch ihren hohen Wirkungsgrad auszeichnen. Polymerelektrolyt-Brennstoffzellen zeichnen sich unter den verschiedenen Arten von Brennstoffzellen durch ihre hohe Leistungsdichte und ihr geringes Leistungsgewicht aus.

Herkömmliche Brennstoffzellen arbeiten in der Regel mit Membranen auf der Basis von fluorhaltigen Polymeren, beispielsweise mit dem Material Nafion®.

Für die Weiterentwicklung der Brennstoffzellentechnologie, insbesondere für deren Anwendung in größerem Maßstab, ist es notwendig, die Herstellkosten der zum Einsatz kommenden Materialien zu reduzieren, ohne daß dabei eine Einbuße an Leistungsfähigkeit gegenüber den herkömmlich verwendeten Materialien in Kauf genommen werden muß. Wenn möglich sollte auch der Fluorgehalt der Membranen reduziert werden.

In den WO-A-96/29359 und WO-A-96/29360 werden Polymerelektrolyte aus sulfonierten aromatischen Polyetherketonen und die Herstellung von Membranen aus diesen Materialien beschrieben.

In der EP-A-0 152 161 werden überwiegend aus der Wiederholungseinheit -O-Ar-CO-Ar- (Ar = zweiwertiger aromatischer Rest) bestehende Polyetherketone (nachfolgend "PEK" genannt) und daraus hergestellte geformte Gebilde beschrieben.

Sulfonierte, streng alternierende Polyetherketone mit der Wiederholungseinheit -O-Ar-CO-Ar- werden in J. Polym. Sci.: Vol. 23, 2205-2222, 1985 beschrieben. Der Aufbau der Polyetherketone geschieht hier durch elektrophilen, und nicht wie in EP-A-0 152 161 beschrieben, durch nucleophilen Angriff. Die Polymeren wurden durch Sulfurtrioxid unter Verwendung von Triethtylphosphat in Dichlorethan sulfoniert. Eine weitere, in dieser Literaturstelle verwendete Sulfonierungsmethode ist die Chlorsulfonierung mit Chlorsulfonsäure. Allerdings wird bei dieser Methode, abhängig vom Grad der Sulfonierung, auch ein Abbau des Molekulargewichtes beobachtet. Es schließt sich die Amidierung des Säurechlorides an. Als mögliches Einsatzgebiet derartiger Polymere wird die Verwendung als lonenaustauscher oder als Entsalzer angegeben. Der Einsatz in Brennstoffzellen wird nicht beschrieben. Eigenschaftsprofile, die den Einsatz in Brennstoffzellen nahelegen, kommen ebenso nicht vor.

Die Herstellung von sulfonierten Polyetherketonen mit Bisphenol-A-Einheiten für die Anwendung in der Osmose und Umkehrosmose (Wasserentsalzung) wird in der einschlägigen Patentliteratur beschrieben, beispielsweise in der US-A-4,625,000. Es ist zu erwarten, daß solche mit Sulfonsäuregruppen modifizierten Polymeren im Vergleich zu Polyetherketonen ohne Bisphenol-A-Einheiten hydrophober sind und somit die Ausbildung von Wasserkanälen in einer Membran begünstigen. Dies wiederum sollte auch bei kleinen Wassergehalten der Membran zu hohen Protonenleitfähigkeitswerten führen.

Beim Versuch der Sulfonierung mit Oleum, Schwefelsäure oder auch Chlorsulfonsäure bei Temperaturen zwischen 0 und 50 °C hat sich herausgestellt, daß bei halogenfreien Polyetherketonen mit Bisphenol-A-Einheiten ein Abbau dieser Polymerer erfolgt.

Mit der vorliegenden Erfindung werden Hochleistungspolymere bereitgestellt, deren chemische Stabilität durch den Einbau von chemisch inerten von Hexafluor-Bisphenol-A-Einheiten erhöht worden ist, die sich ohne nennenswerten Abbau des Polymeren sulfonieren lassen und die im Vergleich zu herkömmlichen sulfonierten PEEK- oder PEK-Typen hydrophober sind und die die Herstellung von Membranen mit verbesserten mechanischen Eigenschaften gestatten.

Polyethersulfone enthaltend Hexafluor-Bisphenol-A Einheiten sind bekannt. In der US-A-4,971,695 sowie in Polym. Mater. Sci. Eng. (1993), 68, 167-9 werden Membranen aus derartigen Polymeren zum Einsatz in der Gastrennung beschrieben.

Die vorliegende Erfindung betrifft die Verwendung von aromatischen Polymeren enthaltend die wiederkehrende Struktureinheit der Formel (I)

-O-Ar¹(SO₃R)ₙC(CF₃)₂-Ar¹(SO₃R)ₙ-O-Ar²-(X-Ar²)ₘ- (I),

worin Ar¹ und Ar² unabhängig voneinander zweiwertige aromatische oder heteroaromatische, gegebenenfalls mit ein oder mehreren unter Einsatzbedingungen inerten einwertigen organischen Gruppen substituierte Reste bedeuten, R Wasserstoff, ein Alkali- oder Erdalkaliion oder ein Ammoniumion bedeuten, n für eine ganze Zahl von 0 bis 3 steht, m 0, 1 oder 2 bedeutet und X eine Gruppe -CO-, -O-, -CₚH₂ₚ-, -CₚF₂ₚ- oder -S- darstellt, worin p eine ganze Zahl von 1 bis 10 ist, in Brennstoffzellen oder in Hochleistungskondensatoren.

Bedeuten irgendwelche Reste zweiwertige aromatische oder heteroaromatische Reste, so handelt es sich dabei um ein- oder mehrkemige aromatische Kohlenwasserstoffreste oder um heterocyclisch-aromatische Reste, die ein- oder mehrkemig sein können. Im Falle von heterocyclisch-aromatischen Resten weisen diese insbesondere ein- oder zwei Sauerstoff-, Stickstoff- oder Schwefelatome im aromatischen Rest auf.

Mehrkemige aromatische Reste können miteinander kondensiert sein oder über C-C-Bindungen oder über Brückengruppen, wie -O-, -S-, -CO-, -SO₂- oder -CₒH₂ₒ- miteinander verbunden sein, wobei o eine ganze Zahl von 1 bis 10 bedeutet.

Bei den zweiwertigen aromatischen oder heteroaromatischen Resten können die Valenzbindungen sich in para- oder in vergleichbarer koaxialer oder paralleler Position oder in meta- oder in vergleichbarer gewinkelter Position zueinander befinden.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind Biphenyl-4,4-en-Bindungen. Ein Beispiel für parallel, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste Ar¹ oder Ar², deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen, oder zweikernige kondensierte aromatische Reste mit parallelen, entgegengesetzt gerichteten Bindungen, insbesondere 1,4-, 1,5- und 2,6-Naphthylen, oder zweikernig über eine C-C Bindung verknüpfte aromatische Reste mit koaxialen, entgegengesetzt gerichteten Bindungen, insbesondere 4,4-Biphenylen.

Die Valenzbindungen, die sich in meta- oder in vergleichbarer gewinkelter Position zueinander befinden, sind gewinkelt angeordnet.

Beispiele für bevorzugte zweiwertige aromatische Reste Ar¹ oder Ar², deren Valenzbindungen sich in meta- oder in vergleichbarer gewinkelter Position zueinander befinden, sind einkernige aromatische Reste mit zueinander metaständigen freien Valenzen, insbesondere 1,3-Phenylen, oder zweikemige kondensierte aromatische Reste mit zueinander gewinkelt gerichteten Bindungen, insbesondere 1,6- und 2,7-Naphthylen, oder zweikernig über eine C-C Bindung verknüpfte aromatische Reste mit zueinander gewinkelt gerichteten Bindungen, insbesondere 3,4'-Biphenylen.

Besonders bevorzugte Reste Ar¹ oder Ar² sind 1,3-Phenylen oder insbesondere 1,4-Phenylen.

Bevorzugt werden sulfonierte aromatische Polymere enthaltend die oben definierte wiederkehrende Einheit der Formel 1, worin Ar¹ und Ar² unabhängig voneinander Phenylen, Naphthylen und/oder Biphenylen bedeuten, insbesondere 1,3- und/oder 1,4-Phenylen.

Bevorzugt werden sulfonierte aromatische Polymere enthaltend die oben definierte wiederkehrende Einheit der Formel I, worin X -CO-bedeutet.

Bevorzugte Gruppen X und Y und/oder Z sind -CO-.

Die aromatischen Reste der erfindungsgemäßen Polymeren können mit inerten Gruppen substituiert sein. Darunter sind Substituenten zu verstehen, die die ins Auge gefaßte Anwendung nicht negativ beeinflussen.

Beispiele für solche Substituenten sind Alkyl-, Alkoxy-, Aryl-, Amino-, Alkohol-, Ether, Sulfonyl-, Phosphonyl-, Acyl-, Nitro-, Carbon- Säure oder deren Ester oder Carbonsäure-amidgruppen oder Halogen.

Unter Alkylgruppen sind verzweigte oder vorzugsweise geradkettige Alkylreste zu verstehen, beispielsweise Alkyl mit ein bis sechs Kohlenstoffatomen, insbesondere Methyl.

Unter Alkoxylgruppen sind verzweigte oder vorzugsweise geradkettige Alkoxyreste zu verstehen, beispielsweise Alkoxyreste mit ein bis sechs Kohlenstoffatomen, insbesondere Methoxy.

Unter Aminogruppen sind Reste der Formel -NH₂, -NHR¹ oder -NR¹ R² zu verstehen, worin R¹ und R² unabhängig voneinander Alkyl- oder Arylreste, vorzugweise Methyl, darstellen.

Unter Alkoholgruppen sind Reste der Formel -OH zu verstehen.

Unter Ethergruppen sind Reste der Formel R¹-O- zu verstehen, worin R¹ die oben angegebene Bedeutung besitzt.

Unter Sulfonylgruppen sind Reste der Formel -SO₂R¹ zu verstehen, worin R¹ die oben definierte Bedeutung besitzt.

Unter Phosphonylgruppen sind Reste der Formel -P(OR³)₃ zu verstehen, worin die Reste R³ unabhängig voneinander Wasserstoff, Alkyl oder Aryl sind.

Unter Acylgruppen sind Reste der Formel -CO-R³ zu verstehen, worin R³ die oben definierte Bedeutung besitzt.

Unter Carbonsäuregruppen sind Reste der Formel-COOH zu verstehen.

Unter Carbonsäureestergruppen sind Reste der Formel -COOR¹ zu verstehen, worin R¹ die oben definierte Bedeutung besitzt.

Unter Carbonsäureamidgruppen sind Reste der Formel -CONH₂, -CONHR¹ oder - CONR¹ R² zu verstehen, worin R¹ und R² die oben definierte Bedeutung besitzen.

Bedeuten irgendwelche Reste Halogen, so handelt es sich dabei beispielsweise um Fluor, Brom oder insbesondere um Chlor.

Bevorzugt werden Polymere enthaltend die wiederkehrende Struktureinheit der Formel I, worin Ar¹ und/oder Ar² neben den zwingend vorliegenden Sulfonylgruppen mit ein bis vier Amino-, Alkohol-, Ether-, Alkyl-, Aryl-, Phosphonyl-, Acyl, Nitro-, Carbonsäure-, Carbonsäureester und/oder Carbonsäureamid-gruppen substitutiert sind.

Ganz besonders bevorzugt werden Polymere enthaltend die wiederkehrende Struktureinheit der Formel I, worin worin Ar¹ und/oder Ar² neben den zwingend vorliegenden Sulfonylgruppen keine weiteren Substituenten aufweisen.

Ein Kennzeichen der verwendeten erfindungsgemäßen Polymeren ist deren Gehalt an Sulfonylgruppen. Diese Gruppen können in freier Form als saure Gruppen vorliegen oder in der Form von Salzen, beispielsweise von Alkali-, Erdalkali- oder Ammoniumsalzen.

Ein Kennzeichen für den Sulfonierungsgrad der erfindungsgemäßen Polymeren ist deren lonenaustauscherkapazität (nachstehend auch "IEC" genannt). Diese wird für die Zwecke der vorliegenden Erfindung durch Elementaranalyse des gewaschenen und getrockneten Polymeren durch die Bestimmung des Verhältnisses von Kohlenstoff zu Schwefel (C/S-Quotient) ermittelt.

Bevorzugt werden sulfonierte Polymere enthaltend die wiederkehrende Struktureinheit der Formel I, die eine Ionenaustauscherkapazität von 0,5 bis 3,0 meq ((-SO₃H)/g Polymer) aufweisen, besonders bevorzugt eine IEC von 1,0 bis 2,0 meq ((-SO₃H)/g Polymer).

Bevorzugt werden aromatische Polymere enthaltend neben der oben definierten wiederkehrenden Struktureinheit der Formel I die wiederkehrende Struktureinheit der Formel II

-O-Ar¹(SO₃R)ₙ-C(CH₃)₂-Ar¹(SO₃R)ₙ-O-Ar²-(Y-Ar²)ₘ- (II),

worin Ar¹, Ar², R, m und n die weiter oben definierte Bedeutung besitzen, und Y eine Gruppe -CO-, -O-, -CₚH₂ₚ-, -CₚF₂ₚ-, -S- oder -SO₂- darstellt, worin p eine ganze Zahl von 1 bis 10 ist.

Bevorzugt werden aromatische Polymere enthaltend neben den oben definierten wiederkehrenden Struktureinheit der Formel I und gegebenenfalls der Formel II die wiederkehrende Struktureinheit der Formel III

-O-Ar³(SO₃R)ₙO-Ar²-(Z- Ar²)ₘ- (III),

worin Ar², R, m und n die weiter oben definierte Bedeutung besitzen, Z eine Gruppe -CO-, -O-, -CₚH₂ₚ-, -CₚF₂ₚ-, -S- oder-SO₂- darstellt, worin p eine ganze Zahl von 1 bis 10 ist, und Ar³ einen zweiwertigen aromatischen oder heteroaromatischen, gegebenenfalls mit ein oder mehreren unter Einsatzbedingungen inerten einwertigen organischen Gruppen substituierten Rest darstellt.

Die erfindungsgemäßen Polymeren müssen die wiederkehrenden Struktureinheiten der Formel I aufweisen und können zusätzlich die wiederkehrenden Struktureinheiten der Formeln II und/oder III aufweisen. Die Mengenverhältnisse dieser Struktureinheiten - falls vorhanden - können verschieden sein.

Vorzugsweise beträgt die Summe des molaren Anteils der wiederkehrenden Struktureinheit der Formel 1 und gegebenenfalls der Formel II in den erfindungsgemäßen Polymeren 10-50 % und der molare Anteil der wiederkehrenden Struktureinheit der Formel III beträgt 90-50%.

Ganz besonders bevorzugt beträgt der molare Anteil der wiederkehrenden Struktureinheit der Formel I 100-10 % und der molare Anteil der wiederkehrenden Struktureinheit der Formel II beträgt 0-90 %.

Ganz besonders bevorzugt werden sulfonierte aromatische Polymere, die im wesentlichen aus der wiederkehrenden Struktureinheit der folgenden Formel bestehen

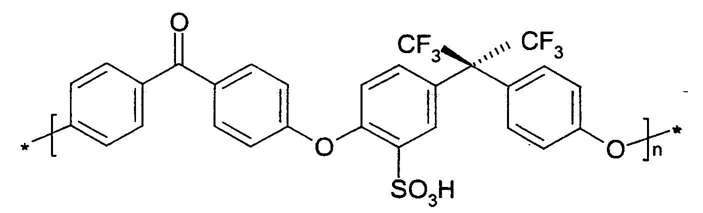

Die erfindungsgemäß verwendeten Polymere können nach an sich bekannten Verfahren hergestellt werden.

Polyetherketone können durch Polykondensation von Hexafluor-Bisphenol-A oder analogen fluorierten Bisphenolen und gegebenenfalls mit weiteren Bisphenolen zusammen mit aromatischen Dihalogenketonen erhalten werden.
Polyether können durch Polykondensation von Hexafluor-Bisphenol-A oder analogen fluorierten Bisphenolen und gegebenenfalls mit weiteren Bisphenolen zusammen mit aromatischen Dihalogenkohlenwasserstoffen oder aromatischen Dihalogenethern erhalten werden.

Polysulfide können durch Polykondensation von Hexafluor-Bisphenol-A oder analogen fluorierten Bisphenolen und gegebenenfalls mit weiteren Bisphenolen zusammen mit aromatischen Dihalogenthioethem erhalten werden.

Die erhaltenen Polyetherketon-, Polyether- oder Polysulfid-Zwischenprodukte werden in einer nachfolgenden Stufe mit einem geeigneten Sulfonierungsmittel, beispielsweise mit Oleum, Schwefelsäure oder Thionylchlorid, umgesetzt, bis der gewünschte Sulfonierungsgrad erreicht wurde.

Die zum Einsatz kommenden monomeren Ausgangsverbindungen, wie Hexafluor-Bisphenol-A, Bisphenol-A, Dibromphenylen, Dichlorbenzophenon, sind an sich bekannt.

Die erfindungsgemäß verwendeten Polymere eignen sich besonders gut zur Herstellung von Membranen mit hervorragenden Gebrauchseigenschaften.

Die Erfindung betrifft auch die Verwendung von Membranen enthaltend die oben definierten Polymeren.

Die erfindungsgemäß verwendeten Membranen weisen üblicherweise eine Dicke von größer gleich 5 µm, vorzugsweise von mehr als 10 µm, besonders bevorzugt von 10 bis 150 µm., und ganz besonders bevorzugt von 20 bis 60 µm. Für Anwendungen in der Brennstoffzelle beträgt die Dicke der Membranen in der Regel wenigstens 10 µm, für Anwendungen als Dielektrikum in Kondensatoren beträgt die Dicke der Membranen in der Regel wenigstens 5 µm.

In Abhängigkeit von der gewünschter Dicke der Membran kommen vorzugsweise Polymerlösungen mit unterschiedlicher Viskosität zum Einsatz. Für Membranen von 5 bis 60 µm Dicke verwendet man vorzugsweise Polymerlösungen mit einer Viskosität von 500 bis 2000 mPas (gemessen bei 80°C in einer Lösung der Polymeren in dem betreffenden Lösungsmittel). Für Membranen von 10 bis 150 µm Dicke verwendet man vorzugsweise Polymerlösungen mit einer Viskosität von 1500 bis 5000 mPas (gemessen bei 80°C in einer Lösung der Polymeren in dem betreffenden Lösungsmittel).

Die so hergestellten Membranen wurden vor allem im Hinblick auf ihre mechanische Stabilität im trockenen und im nassen Zustand, ihre Protonenleitfähigkeit und ihre Leistungen in der Brennstoffzelle überprüft.

Es wurde gefunden, daß sich die erfindungsgemäß verwendeten Membranen durch hervorragende elektrische Eigenschaften auszeichnen. Dazu zählen eine lonenleitfähigkeit von nicht unter 50 mS/cm (gemessen in Kontakt mit flüssigem Wasser bei Raumtemperatur mit Hilfe der 4-Pol Impedanzspektroskopie bei einem Phasenwinkel |Θ| < 1 °).

Es wurde gefunden, daß die Protonerileitfähigkeit bei hervorragenden mechanischen Eigenschaften im Bereich von 120-350 mS/cm bei 80°C liegt (gemessen mit Impedanzspektroskopie in 4-Pol-Technik in reinem Wasser).

Besonders bevorzugt wird die Verwendung von Membranen, die neben dem erfindungsgemäßen Polymeren eine weitere Polymerkomponente aufweisen, vorzugsweise ein sulfoniertes, aminiertes oder auch ein nicht dervatisiertes aromatisches Polymer, und insbesondere ein Polyethersulfon, Polysulfon, Polybenzimidazol oder Polyetherketon.

Die erfindungsgemäß verwendete Membran weist vorzugsweise einen Restgehalt an Lösungmittel von weniger als 0,5 Gew.% auf.

Die Herstellung der erfindungsgemäß verwendeten Membranen umfaßt die Maßnahmen:
(i) Auflösen eines erfindungsgemäßen Polymeren oder seiner Salzform gegebenenfalls zusammen mit weiteren membranenbildenden Polymeren in einem organisch, aprotischen Lösungsmittel,
(ii) Ausstreichen der Lösung auf einen Träger, und
(iii) Verdampfen des Lösungsmittels unter Ausbildung der Membran.

Die Auflösung des erfindungsgemäß verwendeten Polymeren erfolgt üblicherweise in einem organisch aprotischen Lösungsmittel, vorzugsweise in Dimethylformamid (DMF), Dimethylacetamid (DMAC), N-Methyl-2-pyrrolidon (NMP) oder Dimethylsulfoxid (DMSO); dabei liegt die Konzentration des Polymeren vorzugsweise zwischen 3 und 30 Gew.%.

Nach der Ausbildung der Membran wird restliches Lösungsmittel oder Salze nach der durch ein geeignetes Waschmedium, wie z.B. eine 5 %ige Mineralsäure in Wasser, entfernt.

Die erfindungsgemäß verwendeten Membranen können naß und trocken zur Weiterverarbeitung eingesetzt erden.

Erfindungsgemäß werden die Membranen enthaltend die erfindungsgemäßen Polymere besonders für Brennstoffzellen mit niedriger oder keiner Befeuchtung, aber auch für sogenannte Super-Caps, also Kondensatoren mit extrem hoher Kapazität verwendet. Bevorzugt werden Membranen aus Polymeren enthaltend die wiederkehrende Struktureinheit der Formel I, worin X -SO₂- ist, die sich durch eine hohe Protonen-Leitfähigkeit auszeichnen, verwendet.

Die nachfolgenden Beispiele erläutern die Erfindung ohne diese zu begrenzen.

### Allgemeines

Die thermischen Eigenschaften des Polyetherketons wurden mit thermogravimetrischen und DSC Untersuchungen festgestellt. Bei den Polymeren war ein thermischer Abbau erst oberhalb von 500 C zu beobachten. Die untersuchten Polymere nahmen nur geringe Mengen an Lösungsmittel auf und wiesen eine Glasumwandlung oberhalb von 150 C auf. Die untersuchten Polymeren waren in stark polaren Lösungsmitteln in kleinen Konzentrationen löslich. Die mechanischen Eigenschaften der daraus hergestellen Membranen waren zufriedenstellend.

Das sulfonierte Polyetherketon hingegen zeigten bei der thermogravimetrischen Untersuchung bei den thermischen Eigenschaften ein Entweichen von 10 % Wasser. Die Polymere spalteten über 240 C die Sulfonsäuregruppe ab, und bei 500 C war ein Abbau des Polymergerüstes zu beobachten. In der DSC-Untersuchung wurde die Glastemperatur des Polymeren oberhalb 200 C ermittelt. Die hergestellten Membranen waren mechanisch stabil. Die Membranen wiesen bei der Betriebstemperatur der Brennstoffzelle mechanisch ausreichende Eigenschaften auf.

Die Leitfähigkeit der sulfonierten Polymeren wurden mit Hilfe der Impedanzspektroskopie 4- Pol-Messung in Wasser untersucht, dabei wurden für die Protonenleitfähigkeit Werte von über 190 mS/cm in feuchtem Zustand bei 60 C gemessen. Die Werte liegen wesentlich über den mit herkömmlichen kommerziell erhältlichen Polyetheretherketon (PEK Typ P22, Firma Victrex, Hofheim) erzielbaren Leitfähigkeiten, die in Tabelle 1 gegenübergestellt sind. Die Werte der Leitfähigkeit waren trotz eines geringeren IEC-Wertes höher. Die Membran lieferte im Betrieb in der Brennstoffzelle gute Leistungen und hohe Stromdichten.

### Beispiel 1: Ermittlung der Leitfähigkeiten von Membranen aus den erfindungsgemäß verwendeten Polymeren und aus herkömmlichen sulfonierten Polyetherketonen

**Tabelle1: Ergebnisse der Impedanzspektroskopie als 4-Pol-Messung in Wasser**

| Material: | | | | |
|---|---|---|---|---|
| Nicht-fluoriertes PEK, | | | Fluoriertes PEK | |
| IEC 2,13 meq/g | | | I EC 1,95 meq/g | |
| Temp. [°C] | Leitfähigkeit [S/cm] | | Temp. [°C] | Leitfähigkeit [S/cm] |
| 22 | 0,115 | | 23 | 0,107 |
| 0 | 0,130 | | 30 | 0,127 |
| 40 | 0,149 | | 40 | 0,160 |
| 50 | 0,167 | | 50 | 0,203 |
| 60 | 0,187 | | 60 | 0,247 |
| 70 | 0,177 | | 70 | 0,296 |
| 80 | 0,164 | | 80 | 0,296 |
| 80 | 0,160 | | 80 | 0,261 |
| 70 | 0,148 | | 70 | 0,226 |
| 60 | 0,136 | | 60 | 0,207 |
| 50 | 0,124 | | 50 | 0,186 |
| 40 | 0,110 | | 40 | 0,167 |
| 30 | 0,096 | | 30 | 0,145 |
| 23 | 0,086 | | 23 | 0,129 |

### Beispiel 2: Darstellung eines erfindungsgemäß verwendeten sulfonierten Polyetherketons

### 2.1: Herstellung von Poly-(4,4'-hexafluorisopropylidendibenzoether-1,4-phenylencarbonyl-1,4-phenylen)

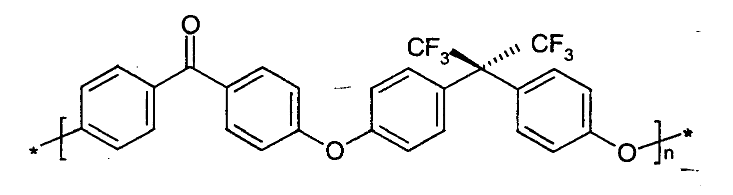

Es wurden 6,960g (20,7mmol) 4,4-(Hexafluorisopropyliden)-diphenol und 4,510g (20,7mmol) 4,4'-Difluorbenzophenon eingewogen. Dann wurden 80ml DMAC (0,01 % H₂O) zugegeben und unter Argon solange gerührt, bis der gesamte Feststoff unter leichtem Erwärmen gelöst war. Im Argonstrom wurde 6,6g (48mmol) getrocknetes Kaliumcarbonat zugegeben. Unter Argon wurde innerhalb von 2 h bis auf 160°C aufgeheizt und bei dieser Temperatur 60 h lang gerührt. Nach dem Abkühlen der Reaktionslösung wurde diese, unter starkem Rühren, in eine Mischung aus 2000ml destilliertem Wasser und 20ml Eisessig eingetragen. Das ausgefallene Polymer wurde abgesaugt und mit destilliertem Wasser und anschließend mit Methanol gewaschen. Danach erfolgte die Trocknung bei 100°C im Vakuumtrockenschrank bis zur Gewichtskonstanz und anschließend die Mahlung des Grobproduktes in einer IKA Labormühle des Typs A 10 [Ausbeute: 10,378g].

Die Charakterisierung des Polymeren ergab folgende Daten:

| | |
|---|---|
| TGA: | Das Polymergerüst war bis 500°C stabil. |
| DSC: | In der DSC Untersuchung verdampfte aus dem Polymer gebundenes Wasser, auch noch beim zweiten Heizen. Eine Glasumwandlung fand bei T_{g} = 167°C statt, diese war auch beim Kühlen als Kristallisation erkennbar. |
| IR (*v̅* = [cm⁻¹]): | 1658 (v, C=O, m), 1595, 1510, 1501 (v, C=C, st), 1250 (v, C-O-C, ss), 1206, 1174, (v, -CF₃, st) |
| GPC: | M_{w} = 101800g/mol; Mₙ = 10500g/mol, U = 8,670 |

### 2.2 Sulfonierung des in Beispiel 2.1 hergestellten Polyetherketons zu Poly-(2-sulfonsäure-4,4'- hexafluorisopropylidendibenzoether-1,4-phenylencarbonyl-1,4-phenylen)

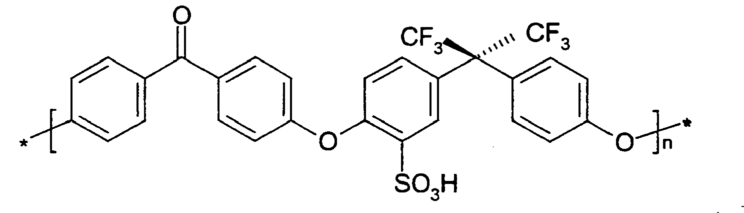

Die Sulfonierung des Polyetherketons wurde in konzentrierter Schwefelsäure durchgeführt. Dafür wurden 30,47g (59,23mmol) Polyetherketon in 600ml konzentrierter Schwefelsäure bei Raumtemperatur (25°C) suspendiert. Die Temperatur wurde unter kräftigem Rühren kontrolliert. Der Reaktionsansatz wurde 1 h bei dieser Temperatur belassen, dann wurde die Temperatur auf 40°C erhöht. Damit sich das Polymer löste, wurde die Temperatur auf 60°C gesteigert. Unter diesen Bedingungen setzte auch die Sulfonierung ein. Nach weiteren 2 h hatte sich das PEK Polymer vollständig gelöst. Das erzeugte sulfonierte Polymer wurde durch Zugabe von 1000ml VE-Wasser ausgefällt. Beim Ausfällen des Polymeren fand dabei eine Zerkleinerung mit einem Ultra-Turrax statt, wodurch das Polymer in weißen Perlen anfiel. Nach dem Absaugen wurde das erhaltene Polymer mit Wasser gewaschen. Nach der Trocknung bei Raumtemperatur folgte eine Vortrocknung bei 100°C im Vakuumtrockenschrank. Nach der Zerkleinerung des Grobprodukts in der Mühle wurde mit Wasser neutral gewaschen. Danach erfolgte die Trocknung bei 100°C im Vakuumtrockenschrank bis zur Gewichtskonstanz. Der Sulfonierungsgrad wurde aus den

Ergebnissen der Elementaranalyse aus dem Massenverhältnis von Schwefel zu Kohlenstoff berechnet.

Elementaranalyse des sulfonierten, fluorierten Polyetherketons:
C 53,8%; H 1,7%; F 21,4%; O 18,9%; S 6,1%,

| | |
|---|---|
| TGA: | Eine erste Stufe bei T = 90°C hatte einen Massenverlust von 10,6% bis |
| | 200°C. Die Abspaltung der Sulfonsäuregruppen erfolgte in zwei Stufen zwischen 240°C bis 300°C und 300°C bis 500°C. Das Polymergerüst des sulfonierten PEK blieb bis 500°C stabil. |
| DSC: | Ein endothermer breiter Peak mit einem Maximum bei 104°C von RT bis 220°C wurde festgestellt. Es war eine thermische Umwandlung bei T = 204°C im zweiten Heizen zu beobachten. |
| IR (*v̅* = [cm⁻¹]): | 1649 (v, C=O, m), 1594, 1501, 1486(v, C=C, st), 1249(v, C-O-C, ss), 1208, 1178, (v, -CF₃, st), 1094(v_{asym}, -SO₃-, w), 1030 (V_{sym}, -SO₃-, w) |
| Elementaranalyse: | C 52,8%; H 2,8%; F 17,3%; O 22,0%; S 6,4%, TV 8,9% |
| ¹H-NMR | Signale (400MHz, DMSO, in ppm): δ=7,98 (d, 1 H), δ=7,83 (d, 1 H), |
| | δ=7,78 (t, 3H), δ=7,44 (d, 1 H), δ=7,36 (d, 1 H), |
| | δ=7,31 (s, 1 H), δ=7,24(dd, 2H), δ=7,07(dd, 4H) |
| ¹³C-NMR Signale (100 MHz, DMSO, in ppm): | δ=193, 173, 161, 159, 157, 153, 139, 132, 130, 127, 125, 123, 121, 119, 118, 63 |

### Beispiel 3: Membranherstellung und Brennstoffzellentest

### 3.1 Membranherstellung

Aus dem gemäß Beispiel 2 hergestellen sulfonierten Polyetherketon wurden protonenleitende Membranen aus einer 17 %igen (w/w) NMP-Lösung des Polyetherketon hergestellt. Dafür wurde das Polymer in NMP gelöst und nach Filtration zu einer dünnen Schicht, mit einer Dicke um 0,25 mm, auf einer Glasplatte gerakelt. Anschließend wurde die Folie im Umlufttrockenschrank ohne Vorwärmen mindestens 10 Stunden bei 100°C getrocknet. Sie wurde von der Glasplatte nach Einlegen in VE-Wasser abgelöst. Die feuchte, gequollene Folie wird auf eine Platte gespannt und an der Luft getrocknet, um eine glatte homogene Membran zu erhalten.

### 3.2 Brennstoffzellentest:

Aus der Membran wurde durch Verpressen mit 2 Elektroden nach WO97/20358 (0.35 mg Pt/(cm² Seite) eine Membran-Elektroden Einheit hergestellt. Diese wurde in eine Brennstoffzelle aus Edelstahl eingebaut. Die Elektroden wurden mit einem Netz aus reinem Nickel kontaktiert. Die Zelltemperatur während der Messung lag bei 60°C, die Temperatur des Befeuchters lag bei 85°C. Als Brenngas wurde reiner Wasserstoff verwendet, das oxidierende Agenz war Luft. Die Wasserstoffseite wurde im "Dead-End-Betrieb" ohne Befeuchtung betrieben.

Folgende Strom-Spannungskurve wurde gemessen:

| Leistung | Strom | Stromdichte | Spannung | Leistungsdichte | Zellentemp. |
|---|---|---|---|---|---|
| [W] | [A] | [mA/cm²] | [mV] | [mW/cm²] | [°C] |
| - | - | - | 980 | - | 60 |
| 0,424 | 0,5 | 40 | 848 | 33,65 | 60 |
| 0,820 | 1 | 79 | 820 | 65,08 | 60 |
| 1,570 | 2 | 159 | 785 | 124,60 | 60 |
| 2,271 | 3 | 238 | 757 | 180,24 | 60 |
| 2,928 | 4 | 317 | 732 | 232,38 | 60 |
| 3,525 | 5 | 397 | 705 | 279,76 | 60 |
| 4,068 | 6 | 476 | 678 | 322,86 | 60 |
| 4,536 | 7 | 556 | 648 | 360,00 | 60 |
| 4,992 | 8 | 635 | 624 | 396,19 | 60 |
| 5,166 | 9 | 714 | 574 | 410,00 | 60 |
| 5,450 | 10 | 794 | 545 | 432,54 | 60 |
| 5,478 | 11 | 873 | 498 | 434,76 | 60 |
| 5,580 | 12 | 952 | 465 | 442,86 | 60 |
| 4,056 | 13 | 1.032 | 312 | 321,90 | 60 |
| 4,992 | 12 | 952 | 416 | 396,19 | 60 |
| 5,346 | 11 | 873 | 486 | 424,29 | 60 |
| 5,560 | 10 | 794 | 556 | 441,27 | 60 |
| 5,292 | 9 | 714 | 588 | 420,00 | 60 |
| 5,040 | 8 | 635 | 630 | 400,00 | 60 |
| 4,550 | 7 | 556 | 650 | 361,11 | 60 |
| 4,092 | 6 | 476 | 682 | 324,76 | 60 |
| 3,550 | 5 | 397 | 710 | 281,75 | 60 |
| 2,932 | 4 | 317 | 733 | 232,70 | 60 |
| 2,274 | 3 | 238 | 758 | 180,48 | 60 |
| 1,588 | 2 | 159 | 794 | 126,03 | 60 |
| 0,835 | 1 | 79 | 835 | 66,27 | 60 |
| 0,431 | 0,5 | 40 | 861 | 34,17 | 60 |
| 0,000 | 0 | - | 985 | - | 60 |

## Patentansprüche

1. Verwendung von aromatische Polymeren enthaltend die wiederkehrende Struktureinheit der Formel (I)
-O-Ar¹(SO₃R)ₙ-C(CF₃)₂-Ar¹(SO₃R)ₙ-O-Ar²-(X-Ar²)ₘ- (I),
worin Ar¹ und Ar² unabhängig voneinander zweiwertige aromatische oder heteroaromatische, Reste bedeuten, R Wasserstoff, ein Alkali- oder Erdalkaliion oder ein Ammoniumion bedeuten, n für eine ganze Zahl von 0 bis 3 steht, m 0, 1 oder 2 bedeutet und X eine Gruppe -CO-, -O-, -CₚH₂ₚ-, -CₚF₂ₚ- oder -S- darstellt, worin p eine ganze Zahl von 1 bis 10 ist, in Brennstoffzellen oder in Hochleistungskondensatoren.

2. Verwendung nach Anspruch 1, **dadurch gekennzeichnet, daß** das aromatische Polymer der Formel I die wiederkehrende Struktureinheit der Formel II enthält
-O-Ar¹(SO₃R)ₙ-C(CH₃)₂-Ar¹(SO₃R)ₙ-O-Ar²-(Y- Ar²)ₘ- (II),
worin Ar¹, Ar², R, m und n die in Anspruch 1 definierte Bedeutung besitzen, und Y eine Gruppe -CO-, -O-, -CₚH₂ₚ-, -CₚF₂ₚ-, -S- oder -SO₂- darstellt, worin p eine ganze Zahl von 1 bis 10 ist.

3. Verwendung nach einem der Ansprüche 1 oder 2, **dadurch gekennzeichnet, daß** X -CO-bedeutet.

4. Verwendung nach einem der Ansprüche 1 oder 2, **dadurch gekennzeichnet, daß** Ar¹ und Ar² unabhängig voneinander Phenylen, Naphthylen und/oder Biphenylen bedeuten, insbesondere 1,3- und/oder 1,4-Phenylen.

5. Verwendung nach einem der Ansprüche 1 oder 2, **dadurch gekennzeichnet, daß** das dieses das aromatische Polymer neben der wiederkehrenden Struktureinheit der Formel I und gegebenenfalls der Formel II die wiederkehrende Struktureinheit der Formel III enthält
-O-Ar³(SO₃R)ₙ-O-Ar²-(Z- Ar²)ₘ- (III),
worin Ar², R, m und n die in Anspruch 1 definierte Bedeutung besitzen, Z eine Gruppe -CO-, -O-, -CₚH₂ₚ-, -CₚF₂ₚ-, -S- oder -SO₂- darstellt, worin p eine ganze Zahl von 1 bis 10 ist, und Ar³ einen zweiwertigen aromatischen oder heteroaromatischen Rest darstellt.

6. Verwendung nach Anspruch 5, **dadurch gekennzeichnet, daß** der molare Anteil der wiederkehrenden Struktureinheit der Formel I und gegebenenfalls der Formel II 10-50 % und der molare Anteil der wiederkehrenden Struktureinheit der Formel III 90-50% beträgt.

7. Verwendung nach Anspruch 1, **dadurch gekennzeichnet, daß** dieses im wesentlichen aus der wiederkehrenden Struktureinheit der folgenden Formel besteht:

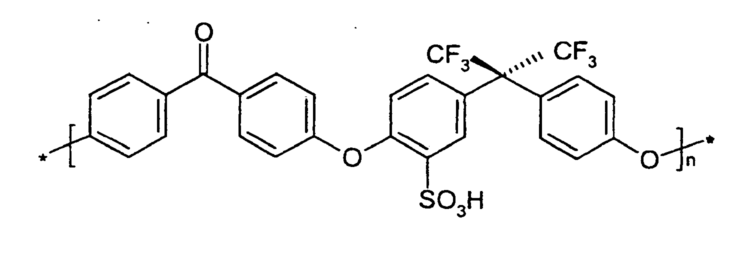

8. Verwendung nach einem der Ansprüche 1 bis 7, **dadurch gekennzeichnet, daß** ein sulfoniertes aromatisches Polymer dessen lonenaustauschkapazität zwischen 0,5 und 3,0 meq (-SO₃H)/g Polymer liegt, bevorzugt zwischen 1,0 und 2,0 meq/g Polymer, eingeseht wird.

9. Verwendung des sulfonierte Polymeres nach Anspruch 8 in Form einer Membran.

10. Verwendung nach Anspruch 9, **dadurch gekennzeichnet, daß** die eingesetzte Membran eine Protonenleitfähigkeit in Kontakt mit flüssigem Wasser bestimmt durch lmpendanzspektroskopie in Wasser bei 80°C zwischen 120 und 350mS/cm aufweist.

11. Verwendung nach Anspruch 9, **dadurch gekennzeichnet, daß** die eingesetzte Membran als weitere Polymerkomponente ein sulfoniertes, aminiertes oder auch nicht dervatisiertes aromatisches Polymer, insbesondere ein Polyethersulfon, Polysulfon, Polybenzimidazol oder Polyetherketon, enthält.

12. Verwendung nach Anspruch 9, **dadurch gekennzeichnet, daß** die eingesetzte Membran eine Dicke zwischen 10 und 150 µm aufweist, vorzugsweise eine Dicke zwischen 20 und 60 µm, aufweist.

## Claims

1. The use of aromatic polymers containing the repeating structural unit of the formula (I)
-O-Ar¹(SO₃R)ₙ-C(CF₃)₂-Ar¹(SO₃R)ₙ-O-Ar²-(X-Ar²)ₘ- (I),
wherein Ar¹ and Ar² are, independently of one another, divalent aromatic or heteroaromatic radicals, R is hydrogen, an alkali metal ion or alkaline earth metal ion or an ammonium ion, n is an integer from 0 to 3, m is 0, 1 or 2 and X is a -CO-, -O-, -CₚH₂ₚ-, -CₚF₂ₚ- or -S- group, wherein p is an integer from 1 to 10, in fuel cells or in high-performance capacitors.

2. The use according to Claim 1, **characterized in that** the aromatic polymer of the formula I contains the repeating structural unit of the formula II
-O-Ar¹(SO₃R)ₙ-C(CH₃)₂-Ar¹(SO₃R)ₙ-O-Ar²-(Y-Ar²)ₘ- (II),
wherein Ar¹, Ar², R, m and n have the meaning defined in Claim 1, and Y is a - CO-, -O-, -CₚH₂ₚ-, -CₚF₂ₚ-, -S- or -SO₂- group, wherein p is an integer from 1 to 10.

3. The use according to any one of Claims 1 or 2, **characterized in that** X is -CO-.

4. The use according to any one of Claims 1 or 2, **characterized in that** Ar¹ and Ar² are, independently of one another, phenylene, naphthylene and/or biphenylene, in particular 1,3- and/or 1,4-phenylene.

5. The use according to any one of Claims 1 or 2, **characterized in that** the aromatic polymer contains besides the repeating structural unit of the formula I and, where appropriate, of the formula II, the repeating structural unit of the formula III
-O-Ar³(SO₃R)ₙ-O-Ar²-(Z-Ar²)ₘ,- (III),
wherein Ar², R, m and n have the meaning defined in Claim 1, Z is a -CO-, -O-, -CₚH₂ₚ-, -CₚF₂ₚ-, -S- or -SO₂- group, wherein p is an integer from 1 to 10, and Ar³ is a divalent aromatic or heteroaromatic radical.

6. The use according to Claim 5, **characterized in that** the molar proportion of the repeating structural unit of the formula I and, where appropriate, of the formula II, is 10-50% and the molar proportion of the repeating structural unit of the formula III is 90-50%.

7. The use according to Claim 1, **characterized in that** the aromatic polymer consists essentially of the repeating structural unit of the following formula:

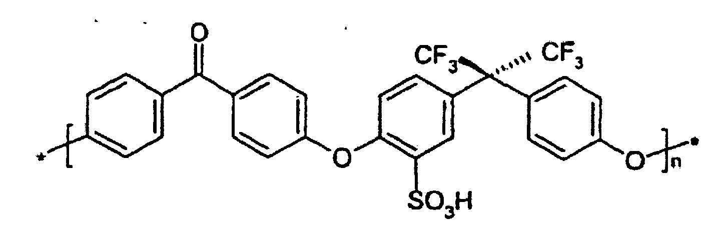

8. The use according to any one of Claims 1 to 7, **characterized in that** a sulfonated aromatic polymer having an ion exchange capacity of between 0.5 and 3.0 meq (-SO₃H)/g of polymer, preferably between 1.0 and 2.0 meq/g of polymer, is used.

9. The use of the sulfonated polymer according to Claim 8 in form of a membrane.

10. The use according to Claim 9, **characterized in that** the membrane used has a proton conductivity in contact with liquid water, determined by impedance spectroscopy in water at 80 °C, of between 120 and 350 mS/cm.

11. The use according to Claim 9, **characterized in that** the membrane used contains as further polymer component a sulfonated, aminated or else underivatized aromatic polymer, in particular a polyether sulfone, polysulfone, polybenzimidazole or polyether ketone.

12. The use according to Claim 9, **characterized in that** the membrane used has a thickness of between 10 and 150 µm, preferably a thickness of between 20 and 60 µm.

## Revendications

1. Utilisation de polymères aromatiques qui contiennent l'unité structurale répétée avec la formule (I)
-O-Ar¹(SO₃R)ₙ-C(CF₃)₂-Ar¹(SO₃R)ₙ-O-Ar²-(X-Ar²)ₘ- (I),
où Ar¹ et Ar² indépendants l'un de l'autre signifient des restes aromatiques ou hétéroaromatiques bivalents, R signifie hydrogène, un ion alcalin- ou alcalino-terreux ou un ion d'ammonium, n se trouve pour un nombre entier de 0 à 3, m signifie 0, 1 ou 2 et X représente un groupement -CO-, -O-, -CₚH₂ₚ-, -CₚF₂ₚ- ou - S-, où p est un nombre entier de 1 à 10, en cellules de combustion ou en condenseurs de haute performance.

2. Utilisation selon la revendication 1, **caractérisée en ce que** le polymère aromatique avec la formule I contient l'unité structurale répétée de formule (II)
-O-Ar¹(SO₃R)ₙ-C(CH₃)₂-Ar¹(SO₃R)ₙ-O-Ar²-(Y-Ar²)ₘ- (II),
où Ar¹, Ar², R, m et n ont la signification définie dans la revendication 1, et Y représente un groupement -CO-, -O-, -CₚH₂ₚ-, -CₚF₂ₚ-, -S- ou -SO₂-, où p este un nombre entier de I à 10.

3. Utilisation selon l'une des revendications 1 ou 2, **caractérisée en ce que** X signifie -CO-.

4. Utilisation selon l'une des revendications 1 ou 2, **caractérisée en ce que** Ar¹ et Ar² indépendant l'un de l'autre signifie le phénylène, le naphtalène, et/ou le biphénylène, spécialement le 1,3- et/ou le 1,4-phénylène.

5. Utilisation selon l'une des revendications 1 ou 2, **caractérisée en ce que** le polymère aromatique à côté de l'unité structurale avec la formule I, et après le cas, avec la formule II contient l'unité structurale avec la formule (III)
-O-Ar³(SO₃R)ₙ-O-Ar²-(Z-Ar²)ₘ- (III),
où Ar², R, m et n ont la signification définie dans la revendication 1, Z représente un groupement -CO-, -O-, -CₚH₂ₚ-, -CₚF₂ₚ-, -S- ou -SO₂-, où p est un nombre entier de 1 à 10 et Ar³ représente un reste aromatique ou hétéroaromatique bivalent.

6. Utilisation selon la revendication 5, **caractérisée en ce que** la proportion molaire de l'unité structurale répétée avec la formule I et après le cas avec la formule II représente 10-50 % et la proportion molaire de l'unité structurale répétée avec la formule III 90-50 %.

7. Utilisation selon la revendication 1, **caractérisée en ce que**, en essence, celle-ci consiste dans l'unité structurale répétée avec la suivante formule :

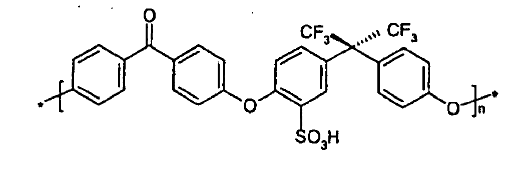

8. Utilisation selon l'une des revendications 1 à 7, **caractérisée en ce qu'**on utilise un polymère aromatique sulfoné dont la capacité de change ionique est située entre 0,5 et 3,0 meq (-SO₃H)/g polymère, de préférence entre 1,0 et 2,0 meq/g polymère.

9. Utilisation du polymère sulfoné selon la revendication 8 en forme d'une membrane.

10. Utilisation selon la revendication 9, **caractérisée en ce que** la membrane utilisée présente une conductibilité protonique en contact avec l'eau liquide, déterminée par spectroscopie d'impédance, dans l'eau à 80 °C, entre 120 et 350 mS/cm.

11. Utilisation selon la revendication 9, **caractérisée en ce que** la membrane utilisée contient comme composante polymérique supplémentaire un polymère aromatique sulfoné, aminé ou aussi non dérivé, spécialement un polyéthersulfone, polysulfone, pollybenzimidazol ou polyéthercétone.

12. Utilisation selon la revendication 9, **caractérisée en ce que** la membrane utilisée présente une épaisseur entre 10 et 150 µm, de préférence une épaisseur entre 20 et 60 µm.
